# EUROPEAN PATENT SPECIFICATION

(11) **EP 2 197 713 B1**
(45) Date of publication and mention of the grant of the patent: **26.12.2012**
(21) Application number: 08705373.2
(22) Date of filing: 28.01.2008
(51) Int. Cl.: B60R 22/46

(54) **A SEAT BELT PRETENSIONER FOR A MOTOR VEHICLE**
SITZGURTVORSPANNER FÜR EIN KRAFTFAHRZEUG
PRÉTENDEUR DE CEINTURE DE SÉCURITÉ POUR VÉHICULE À MOTEUR

(30) Priority: 10.09.2007 WO PCT/SE2007/000780; 16.01.2008 WO PCT/SE2008/050049
(43) Date of publication of application: 23.06.2010
(73) Proprietor: Autoliv Development AB, 44783 Vårgårda (SE)
(72) Inventor: HJERPE, Erik, S-42361 Torslanda (SE); BRÅSE, Dan, S-44732 Vårgårda (SE)
(74) Representative: Beattie, Alex Thomas Stewart
(86) International application number: PCT/SE2008/050103
(87) International publication number: WO 2009/035398

(56) References cited:
- EP-A1- 0 093 233
- EP-A2- 0 093 844
- EP-B1- 0 093 233
- DE-A1- 4 304 492
- DE-A1- 4 331 723
- DE-A1- 19 738 734
- FR-A2- 2 336 951

## Description

This invention relates to a seat belt arrangement for a motor vehicle and to a pretensioner for such a seat belt arrangement.

In a conventional three-point motor vehicle safety belt arrangement, a length of strong webbing is secured at one end to the vehicle body, passes through an aperture in a tang adapted to cooperate releasably with a buckle also connected with the vehicle body, and passes through, for example, a guide mounted on a "B" pillar of the vehicle adjacent the associated vehicle seat, to a so-called retractor, comprising a reel or bobbin which is rotatable in a retractor frame secured to the vehicle. The safety belt is secured at its other end to this reel or bobbin which is spring-biased in a sense to cause it normally to wind the webbing onto the reel to take up any slack in the webbing, and can normally be drawn from the reel simply by pulling the belt. However, in an accident situation, a blocking mechanism acts to block rotation of the reel to prevent drawing of the belt from the reel and thus to restrain movement of the person wearing the belt. The blocking mechanism may be inertially or centrifugally operated or operated by gravitational forces in the event of the vehicle tilting excessively, for example in a rollover situation.

It is known to provide a vehicle safety belt arrangement of the above character with a pretensioner. A pretensioner operates at an early stage in a crash situation to tighten the respective seat belt to prevent the occupant from jerking forward in the crash. Thus, in the event of a crash, such a pretensioner will tighten the belt almost instantaneously, to reduce the motion of the occupant in a violent crash. Document EP 0093233 B1 shows an example of a pretensioner.

It is among the objects of the present invention to provide an improved seat belt arrangement incorporating a pretensioner, which is compact and has a low component count.

According to the present invention, there is provided a seat belt arrangement for a vehicle, including a seat belt retractor comprising a hollow retractor reel mounted for rotation in a retractor frame and a pretensioner wherein the pretensioner includes a rotary output member coupled with or constituted by a rotary piston mounted within a working chamber constituted by said retractor reel or located coaxially within said reel, said working chamber having an inlet for gas under pressure to drive the rotary piston and hence the output member, said output member having a normal position and being angularly displaceable from said normal position by pressurized gas fed to said inlet the rotary piston being connected with the retractor reel by way of a clutch arrangement, such that the piston can, via said clutch arrangement rotate the retractor reel by displacement in said working chamber from said normal position towards a limiting position to pretension such seat belt, and wherein the rotary piston takes the form of a vane extending generally radially in said working chamber and in substantial sealing relationship with the cylindrical peripheral surface of said chamber; in sealing relationship with opposite ends of the working chamber and in sealing relationship with respect to, or integral with, a central structure in said chamber which central structure is likewise rotatable in said chamber, the pretensioner actuator assembly further including a radially extending fixed stop or wall in said chamber extending from the cylindrical peripheral wall of the working chamber to said central structure and in substantial sealing relationship with the peripheral surface of said chamber; in sealing relationship with opposite end walls of the working chamber and in sealing relationship with respect to said central structure, said working chamber is provided by the hollow interior of said retractor reel and the output member is constituted by said rotary piston and carries at least one latch tooth or pawl which cooperates with teeth formed internally in said reel to form said clutch arrangement.

Preferably, said rotary piston has a shaft fixed thereto, coaxial with said working chamber and extending from the working chamber and within the hollow retractor reel and wherein said shaft carries a member within the reel which has a latch or pawl which cooperates with teeth formed internally in said hollow retractor reel to form said clutch arrangement.

Conveniently, a vent port communicates with said working chamber at a location adjacent said fixed stop or wall on the side of said stop or wall remote from said inlet or inlets.

Advantageously, said inlet is connected with a pyrotechnic gas generator.

Alternatively, said inlet is connected with a pneumatic source.

Alternatively, said working chamber has a first inlet connected with a pyrotechnic gas generator and a further inlet connected with a pneumatic source via a sensor-operated valve.

Embodiments of the invention are described below with reference to the accompanying drawings, in which:
Figure 1 is a schematic view partly in section along the retractor reel axis and partly in perspective of an assembly forming part of one form of motor vehicle seat belt arrangement embodying the invention, with parts omitted for purposes of illustration.
Figure 2 is a schematic perspective view showing part of the assembly of Figure 1,
Figure 3 is a view of part of the assembly of Figures 1 and 2, in section along the line III-III in Figure 1,
Figure 4 is a schematic perspective view showing an assembly forming part of another form of motor vehicle seat belt arrangement embodying the invention, with parts omitted for purposes of illustration,
Figure 5 is a fragmentary perspective view showing part of the assembly of Figure 4,
Figure 6 is a fragmentary perspective view showing another part of the assembly of Figures 5 to 8,
Figure 7 is a schematic perspective view showing part of a seat belt pretensioner assembly forming part of another, and preferred, motor vehicle seat belt arrangement embodying the invention, again with parts omitted for purposes of illustration, and
Figures 8 and 9 are schematic perspective views each showing part of the assembly of Figure 7.

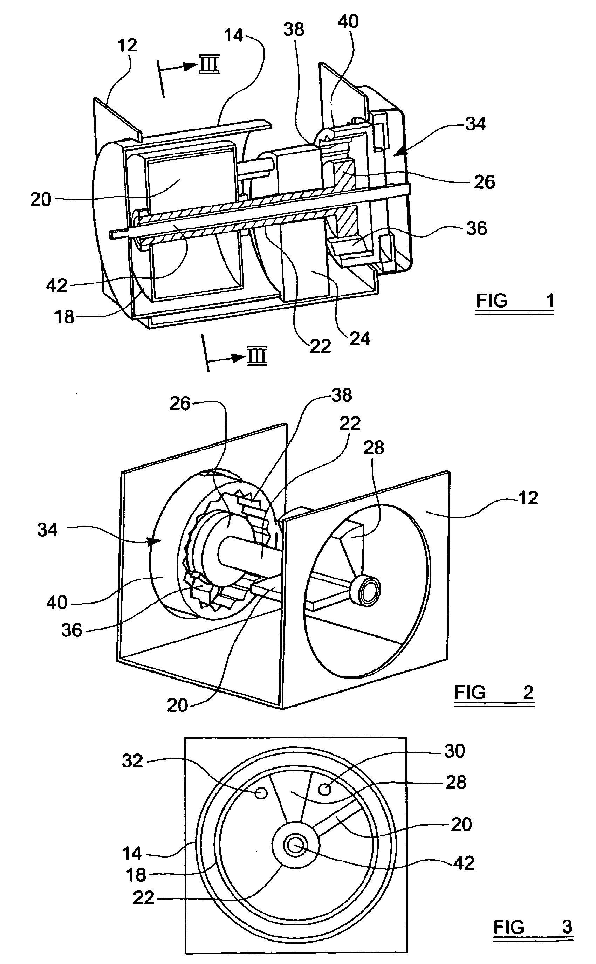

Referring to Figures 1 to 3, a seat belt retractor 10 comprises a frame 12 in which is rotatably mounted a reel or bobbin 14 of cylindrical form to which, in known fashion, is secured one end of a seat belt (not shown) which is wound around the bobbin in manner known per se. In conventional manner, a spring-biasing mechanism is provided, for example utilising a spiral or clock-type spring (not shown) and which operates to tension the seat belt around the wearer in normal use and to rotate the reel to rewind the seat belt thereon when the wearer unbuckles the belt. The reel 14 is hollow and receives a pretensioner actuator assembly, herein for convenience termed pre-tensioning motor. This pre-tensioning motor comprises a stationary cylindrical drum, referenced 18 (see Figure 1), which is accommodated coaxially within the hollow retractor reel 14. The interior of the drum 18 provides a working chamber in the form of a cylindrical bore in which a rotary piston 20 is rotatable about the central axis of the cylindrical drum 18. The piston 20 is fixed to or integral with a central shaft 22 which is coaxial with the drum and reel 14 and extends rotatably through bearings in the end walls of the drum 18. On one side of the drum 18, the shaft 22 extends from the drum through a manifold structure 24 fixed to the frame 12 and carries at its end remote from the piston 20 an output member or wheel 26.

Referring to Figure 3, a stop member 28 of sector shape, within the drum 18, extends radially inwardly from the peripheral wall of the drum 18 to engage substantially sealingly, by its inner end, the surface of shaft 22 within the drum. The stop member is also sealed with respect to the peripheral wall of the drum 18 and with respect to the opposing end walls of the drum 18. Accordingly, there is defined within the drum 18, between the member 28 and the piston or vane 20, an expansible working space. The expansible working space is connected with an inlet port 30 which lies adjacent the stop member 28 and adjacent the vane 20 in the normal un-activated position of the latter. The space defined within the drum 18 between the vane 20 and the stop member 28, on the side of vane 20 remote from inlet port 30, is connected with a port 32 which lies near the stop member 28 on the side of the member 28 remote from inlet 30. The inlet port 30 is connected with a pyrotechnic gas generator (not shown). The port 32 normally functions as a ventilation port or exhaust port. For purposes of illustration, Figure 3 shows the piston 20 displaced somewhat from its normal un-activated position. The piston 20 forms, with the drum 18 and the member 28, the driving portion of the pretensioner capable of rotating the shaft 22 and the wheel 26. The ports 30 and 32, in the embodiment of the invention described with reference to Figures 1 and 3 are formed in one end wall of the drum 18, which is secured to the manifold structure 24 shown in Figure 1 and which connects the port 30 with the pyrotechnic gas generator.

In this embodiment, as shown in Figure 2 in which the reel 14 and drum 18 are omitted, shaft 22 extends from one end of the retractor reel 14, through the manifold structure 24, (also not shown in Figure 2), to a tread head 34, and the wheel 26 at the end of the shaft 22 is located within the tread head. The wheel 26 carries an inertial or the like latch or pawl 36 engageable with locking teeth 38 which extend in a circumferential track around the internal surface of a collar 40 formed integrally with the tread head and coaxial with the latter. The last-mentioned latch or pawl forms, with said track of locking teeth 38, a clutch arrangement whereby rotation of the shaft 22 by piston 20 can impart consequent rotation to the tread head. In this embodiment, as shown in Figure 1, the shaft 22 is hollow and the tread head is connected with the end of the retractor reel 14 remote from the tread head by a torsion bar 42 which extends axially through the hollow shaft 22 and thus through the drum 18.

The ports 30 and 32, in the embodiments of the invention described, with reference to Figures 1 to 3 are formed in one end wall of the drum 18, which is secured to the manifold structure 24 shown in Figure 1 and which connects the port 30 with the pyrotechnic gas generator.

If the sensor which controls firing of the pyrotechnic gas generator is triggered, (for example by decelerational or inertial forces acting on the vehicle, such as forces arising from the early stages of an actual impact event), the pyrotechnic device is fired and accordingly the piston 20 is driven in a clockwise direction as viewed in Figure 3 by the pyrotechnic gas pressure acting behind the piston 20, thereby rotating the wheel 26 and thus tightening the seat belt about the wearer.

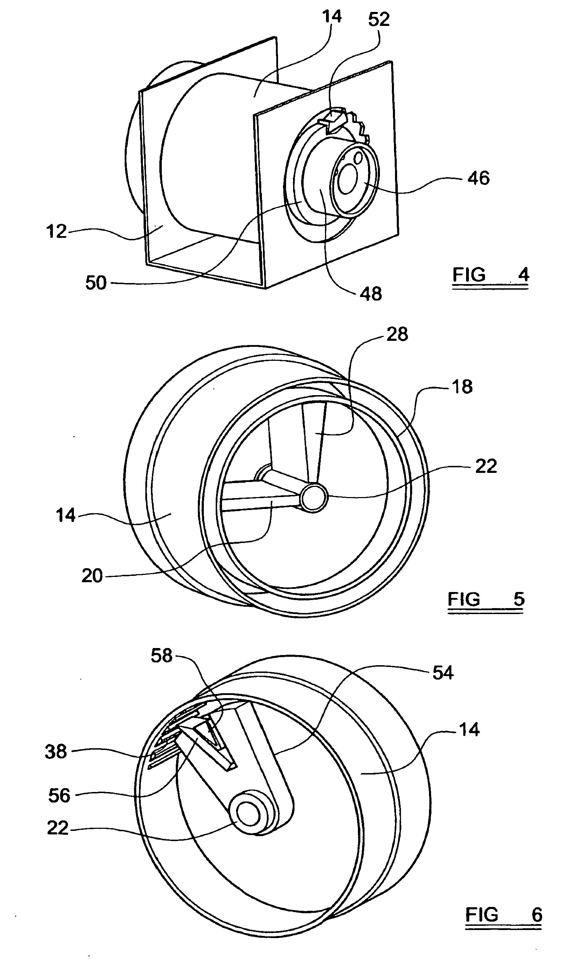

A variant shown in Figures 4 to 6 is similar to the embodiment of Figures 1 to 3 except that, instead of the gas from the gas generator being supplied to the pretensioner motor by a manifold structure disposed between the reel 14 and the tread head, the gas from the gas generator is supplied from one end of the assembly and the shaft 22 driven by the rotary piston, instead of driving the tread head via wheel 26, carries part of a clutch mechanism, within the reel 14 itself, which co-operates with a track of teeth 38 formed internally in the reel 14.

In Figures 4 to 6, parts corresponding to parts in Figures 1 to 3 have corresponding references.

Referring to Figures 4 to 6, in this embodiment of the invention, the pre-tensioning motor is again incorporated within a hollow seat belt retractor reel or bobbin 14. In this arrangement, as best shown in Figure 5, the cylindrical space within which the motor piston or vane works is again provided by the interior of a cylindrical drum 18 having an annular wall coaxial with the reel 14, the drum 18 being received within the hollow reel or bobbin 14, and being fixed with respect to the frame 12 in which the reel 14 rotates.

In the embodiment of Figures 4 to 6, the drum 18 has, extending from its end wall at one axial end of the drum, a cylindrical spigot 46 having respective passages extending therethrough parallel with the axis of the drum and leading to the ports 30 and 32 formed in that end wall of the drum 18. An appropriate manifold (not shown) engages the end of this spigot 46 remote from the drum 18 and provides communication of the passage leading to port 30 with the pyrotechnic gas generator and additionally holds the drum 18 against rotation relative to the retractor frame 12. The spigot 46 or a bearing sleeve 48 fitted thereon, acts as a journal supporting the reel 14 and its tread head (not shown in full) on one side of the frame 12 for rotation with respect the frame 12, in a bearing which is not shown. The spigot 46 also carries a collar 50 in which is mounted a latch 52 of a conventional retractor blocking mechanism co-operating with teeth formed in the retractor frame to provide the conventional inertia blocking function of the seat belt arrangement.

In this embodiment, the rotary piston 20 again has fixed thereto or integral therewith, a shaft 22, centered on the axis of drum 18 and reel 14, and supported in bearings in the end walls of the drum 18. In this embodiment the central shaft 22 is again in the form of a hollow tube and extends sealingly through a central bore (not shown) in the end wall of the drum 18 remote from spigot 46 and, as shown in Figure 6, carries at its free end, within the reel 14, instead of the wheel 26 of Figure 1, a radially extending arm 54 which carries an inertia latch 56 with a cooperating leaf spring 58. The latch 56 is capable of engaging with the above-mentioned locking teeth 38 which extend in a circumferential track (only part of which track is shown in Figure 6), around the internal surface of the reel 14 at the location of the arm 54. It will be understood that the piston shaft 22 may, for example, project beyond the arm 54 into a central bore in the adjacent end of the reel 14, and which bore forms a bearing for this shaft, the reel 14, at that end, being in turn rotatably supported in the retractor frame 12. That end of the reel is connected with a conventional rewind spring mechanism (not shown).

Whilst, in Figures 3 and 5, the drum 18 is shown as being spaced radially inwardly from the interior of the hollow reel 14, the drum may engage the inner surface of the hollow reel 14 and act as a plain journal supporting the reel 14 for rotation.

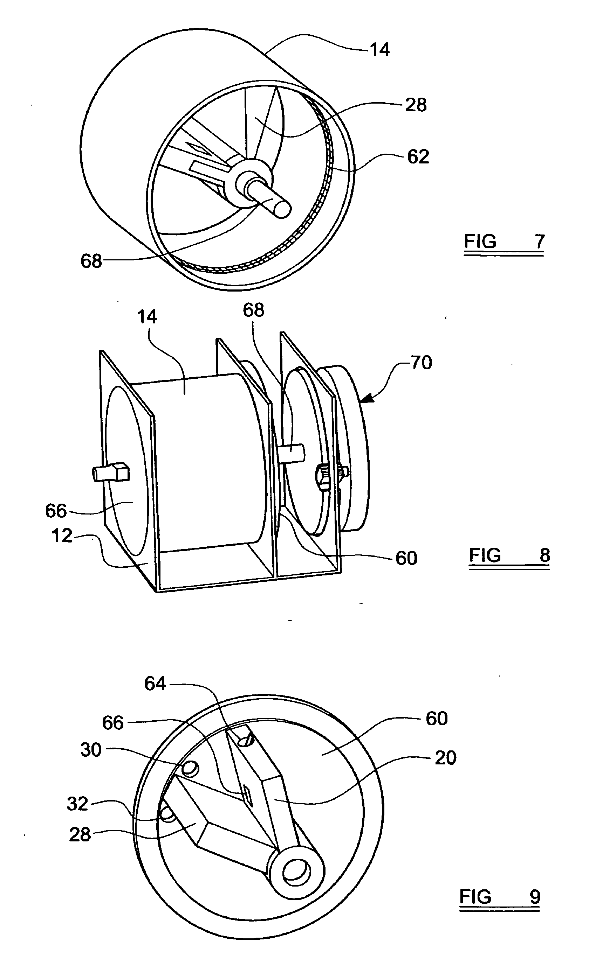

Referring to Figures 7 to 9, a further and preferred embodiment of the invention is shown in which the pretensioner motor again has a working chamber provided within the hollow cylindrical retractor reel 14. In Figures 7 to 9, parts corresponding to parts in Figures 1 to 3 and 4 to 6 again have corresponding references.

In this embodiment, the working chamber of the pretensioner motor is provided by the cylindrical hollow interior of the retractor reel 14 itself, which, of course, rotates in the retractor frame 12. Accordingly, the stop member 28, in this embodiment, is not fixed to the reel 14 but is fixed with respect to the retractor reel frame 12. By way of example, the stop member 28 may be fixed to a stationary end wall 60 of the working chamber, which end wall the respective end of the retractor reel 14 engages sealingly whilst being rotatable with respect thereto. In Figure 8, the end wall 60 is shown as being fixed to an upstanding part of the frame 12. In this embodiment, the central shaft of the piston or vane 20 need not extend from the reel, because the interior surface of the reel is provided with one or more circumferentially extending tracks of recesses forming ratchet "teeth" 62 (indicated schematically in Figure 7) for engagement with a latch or pawl 64 carried by the piston 20 itself and which can be projected radially outwardly to engage such ratchet "teeth". As shown, the pawl 64 may be a sealing sliding fit in a radial passage in the piston 20, such passage connecting at its inner end with an inlet 66 on the face of the piston subject to gas pressure, whereby pawl 64 is arranged to be urged radially outwards from the piston 20, for engagement with the teeth 62, by gas pressure in the working chamber. To ensure sealing tightness, of course, successive ratchet teeth 62 are in the form of spaced-apart recesses in the otherwise smooth, cylindrical, internal surface of the reel 14, each said recess being shorter in the circumferential direction than the radially outer end of the vane or piston 20. The pyrotechnic inlet port 30 and exhaust port 32 in this case are, of course, provided in the stationary end wall 60. In this arrangement, the seat belt reel 14 may be connected, for example by an end wall 66 integral with the circumferential wall of the reel at the axial end of the reel opposite the stationary wall 60, to an axially extending shaft which may, as illustrated in Figure 8, take the form of a torsion bar 68 connected, in turn, with a tread head 70 rotatably mounted in the retractor frame 12, said axial shaft 68 passing through a central aperture in said stationary wall 60.

Whilst, in the embodiments described, the inlet 30 is described as being connected with a pyrotechnic gas generator, the inlet 30 may be connected, via a valve operable by a crash sensor or pre-crash sensor, with a reservoir of compressed gas (herein referred to as a pneumatic source). Alternatively, may be respective inlets to the working chamber of the rotary piston connected with a pyrotechnic gas generator and a pneumatic source respectively.

## Claims

1. A seat belt arrangement for a vehicle, including a seat belt retractor comprising a hollow retractor reel (14) mounted for rotation in a retractor frame (12) and a pretensioner (18, 20, 22, 26) wherein the pretensioner includes a rotary output member (20, 26, 54) coupled with or constituted by a rotary piston (20) mounted within a working chamber (14, 18) constituted by said retractor reel or located coaxially within said reel, said working chamber having an inlet (30) for gas under pressure to drive the rotary piston (20) and hence the output member, said output member (20, 26, 54) having a normal position and being angularly displaceable from said normal position by pressurized gas fed to said inlet (30), the rotary piston (20) being connected with the retractor reel by way of a clutch arrangement (26, 36, 38, 54, 56, 38, 62, 64), such that the piston (20) can, via said clutch arrangement rotate the retractor reel (14) by displacement in said working chamber from said normal position towards a limiting position to pretension such seat belt, and wherein the rotary piston (20) takes the form of a vane extending generally radially in said working chamber and in substantial sealing relationship with the cylindrical peripheral surface of said chamber; in sealing relationship with opposite ends of the working chamber and in sealing relationship with respect to, or integral with, a central structure in said chamber which central structure is likewise rotatable in said chamber, the pretensioner actuator assembly further including a radially extending fixed stop or wall (28) in said chamber extending from the cylindrical peripheral wall of the working chamber to said central structure and in substantial sealing relationship with the peripheral surface of said chamber; in sealing relationship with opposite end walls of the working chamber and in sealing relationship with respect to said central structure, ***characterised in that***
said working chamber is provided by the hollow interior of said retractor reel (14) and the output member is constituted by said rotary piston (20) and carries at least one latch tooth or pawl (64) which cooperates with teeth (62) formed internally in said reel to form said clutch arrangement.

2. A seat belt arrangement according to claim 1 wherein said rotary piston has a shaft (22) fixed thereto, coaxial with said working chamber and extending from the working chamber and within the hollow retractor reel (14), and wherein said shaft (22) carries a member (26, 54) within the reel (14) which has a latch or pawl (36, 56) which cooperates with teeth (38, 62) formed internally in said hollow retractor reel (14) to form said clutch arrangement (26, 36, 38, 54, 56, 38, 62, 64).

3. A seat belt arrangement according to claim 1 or 2 wherein a vent port communicates with said working chamber at a location adjacent said fixed stop or wall (28) on the side of said stop or wall remote from said inlet (30) or inlets.

4. A seat belt arrangement according to any preceding claim wherein said inlet (30) is connected with a pyrotechnic gas generator.

5. A seat belt arrangement according to any of claims 1 to 3 wherein said inlet (30) is connected with a pneumatic source.

6. A seat belt arrangement according to any of claims 1 to 3 wherein said working chamber has a first inlet (30) connected with a pyrotechnic gas generator and a further inlet connected with a pneumatic source via a sensor-operated valve.

## Patentansprüche

1. Eine Sitzgurtanordnung für ein Fahrzeug, die einen Sitzgurtretraktor umfasst, der eine hohle Retraktorrolle (14), die zur Drehung in einem Retraktorrahmen (12) montiert ist, und einen Straffer (18, 20, 22, 26) beinhaltet, wobei der Straffer ein Drehausgabeelement (20, 26, 54) umfasst, das mit einem Drehkolben (20) gekoppelt oder durch einen Drehkolben (20) ausgebildet ist, der innerhalb einer Arbeitskammer (14, 18) montiert ist, die durch die Retraktorrolle ausgebildet ist oder sich koaxial innerhalb der Rolle befindet, wobei die Arbeitskammer einen Einlass (30) für Gas unter Druck aufweist, um den Drehkolben (20) und folglich das Ausgabeelement anzutreiben, wobei das Ausgabeelement (20, 26, 54) eine normale Position aufweist und durch dem Einlass (30) zugeführtes Druckgas aus der normalen Position winkelförmig verschiebbar ist, wobei der Drehkolben (20) mittels einer Kupplungsanordnung (26, 36, 38, 54, 56, 38, 62, 64) an das Retraktorrad angeschlossen ist, so dass der Kolben (20) über die Kupplungsanordnung das Retraktorrad (14) durch Verschiebung in der Arbeitskammer aus der normalen Position zu einer begrenzenden Position hin drehen kann, um den Sitzgurt zu straffen, und wobei der Drehkolben (20) die Form eines Flügels annimmt, der sich allgemein radial in der Arbeitskammer erstreckt und in wesentlicher Dichtungsbeziehung mit der zylinderförmigen Umfangsfläche der Kammer ist; in Dichtungsbeziehung mit gegenüberliegenden Enden der Arbeitskammer und in Dichtungsbeziehung mit Bezug zu oder einstückig mit einer zentralen Konstruktion in der Kammer, wobei die zentrale Konstruktion ebenfalls in der Kammer drehbar ist, wobei die Strafferbetätigungsanordnung ferner einen sich radial erstreckenden Festanschlag oder eine sich radial erstreckende Wand (28) in der Kammer umfasst, der oder die sich von der zylinderförmigen Umfangsfläche der Arbeitskammer zu der zentralen Konstruktion erstreckt und in wesentlicher Dichtungsbeziehung mit der Umfangsfläche der Kammer ist; in Dichtungsbeziehung mit gegenüberliegenden Endwänden der Arbeitskammer und in Dichtungsbeziehung mit Bezug zu der zentralen Konstruktion, **dadurch gekennzeichnet, dass**
die Arbeitskammer durch den hohlen Innenraum des Retraktorrads (14) bereitgestellt und das Ausgabeelement durch den Drehkolben (20) ausgebildet wird und mindestens einen Sperrzahn oder eine Sperrklinke (64) trägt, der oder die mit Zähnen (62) zusammenwirkt, die intern in dem Rad gebildet sind, um die Kupplungsanordnung zu bilden.

2. Sitzgurtanordnung gemäß Anspruch 1, wobei der Drehkolben eine daran befestigte, zu der Arbeitskammer koaxiale und sich von der Arbeitskammer und innerhalb des hohlen Retraktorrads (14) erstreckende Welle (22) aufweist und wobei die Welle (22) ein Element (26, 54) innerhalb des Rads (14) trägt, das eine Sperre oder Klinke (36, 56) aufweist, die mit Zähnen (38, 62) zusammenwirkt, die intern in dem hohlen Retraktorrad (14) gebildet sind, um die Kupplungsanordnung (26, 36, 38, 54, 56, 38, 62, 64) zu bilden.

3. Sitzgurtanordnung gemäß Anspruch 1 oder 2, wobei eine Entlüftungsöffnung mit der Arbeitskammer an einer Stelle neben dem Festanschlag oder der Wand (28) an der Seite des Anschlags oder der Wand entfernt von dem Einlass (30) oder Einlässen in Verbindung steht.

4. Sitzgurtanordnung gemäß einem vorhergehenden Anspruch, wobei der Einlass (30) an einen pyrotechnischen Gaserzeuger angeschlossen ist.

5. Sitzgurtanordnung gemäß einem der Ansprüche 1 bis 3, wobei der Einlass (30) an eine Druckluftquelle angeschlossen ist.

6. Sitzgurtanordnung gemäß einem der Ansprüche 1 bis 3, wobei die Arbeitskammer einen an einen pyrotechnischen Gaserzeuger angeschlossenen ersten Einlass (30) und einen an eine Druckluftquelle über ein sensorbetriebenes Ventil angeschlossenen weiteren Einlass aufweist.

## Revendications

1. Un agencement de ceinture de sécurité de véhicule, comprenant un enrouleur composé d'une bobine d'enrouleur creuse (14) montée pour la rotation dans une structure d'enrouleur (12) et un prétendeur (18, 20, 22, 26), le prétendeur comprenant un élément de sortie rotatif (20, 26, 54) raccordé à ou constitué d'un piston rotatif (20) monté à l'intérieur d'une chambre de travail (14, 18) créée par la bobine d'enrouleur ou située coaxialement à l'intérieur de la bobine, ladite chambre de travail ayant une entrée (30) pour le gaz sous pression afin d'entraîner le piston rotatif (20) et, par conséquent, l'élément de sortie, ledit élément de sortie (20, 26, 54) ayant une position normale et pouvant se déplacer de manière angulaire par rapport à la position normale sous l'effet du gaz sous pression introduit dans l'entrée (30), le piston rotatif (20) étant connecté à la bobine d'enrouleur au moyen d'un système d'embrayage (26, 36, 38, 54, 56, 38, 62, 64), de telle sorte que le piston (20) peut, par le biais du système d'embrayage, faire tourner la bobine d'enrouleur (14) par le passage dans la chambre de travail de la position normale à une position limitatrice afin de prétendre la ceinture de sécurité, et le piston rotatif (20) prenant la forme d'une pale s'étendant généralement radialement dans la chambre de travail et en relation de fermeture substantielle avec la surface périphérique cylindrique de la chambre ; en relation de fermeture avec les extrémités opposées de la chambre de travail et en relation de fermeture par rapport à, ou de manière intégrée à, une structure centrale dans la chambre, la structure centrale étant rotative dans la chambre, l'ensemble actionneur de prétendeur comprenant également une butée fixe ou une paroi (28) s'étendant radialement dans la chambre, allant de la paroi périphérique cylindrique de la chambre de travail à la structure centrale et en relation de fermeture substantielle avec la surface périphérique de la chambre ; en relation de fermeture avec les parois d'extrémité opposées de la chambre de travail et en relation de fermeture par rapport à la structure centrale, **se caractérisant par le fait que**
la chambre de travail est créée par l'intérieur creux de la bobine d'enrouleur (14) et l'élément de sortie est constitué du piston rotatif (20) et transporte au moins une dent de verrou ou un cliquet (64) qui coopère avec les dents (62) présentes à l'intérieur de la bobine pour former ledit système d'embrayage.

2. Un agencement de ceinture de sécurité selon la revendication 1, dans lequel un arbre (22) est fixé sur le piston rotatif, l'arbre étant coaxial à la chambre de travail et partant de la chambre de travail et allant dans la bobine d'enrouleur creuse (14), et l'arbre (22) portant un élément (26, 54) à l'intérieur de la bobine (14) muni d'un verrou ou d'un cliquet (36, 56) qui coopère avec les dents (38, 62) présentes à l'intérieur de la bobine d'enrouleur creuse (14) pour former ledit système d'embrayage (26, 36, 38, 54, 56, 38, 62, 64).

3. Un agencement de ceinture de sécurité selon les revendications 1 ou 2, dans lequel un orifice de ventilation communique avec la chambre de travail à un endroit adjacent à la butée fixe ou paroi (28) sur le côté de la butée ou paroi, à distance de l'entrée (30) ou des entrées.

4. Un agencement de ceinture de sécurité selon n'importe laquelle des revendications précédentes, dans lequel l'entrée (30) est connectée à un générateur de gaz pyrotechnique.

5. Un agencement de ceinture de sécurité selon n'importe laquelle des revendications 1 à 3, dans lequel l'entrée (30) est connectée à une source pneumatique.

6. Un agencement de ceinture de sécurité selon n'importe laquelle des revendications 1 à 3, dans lequel la chambre de travail possède une première entrée (30) connectée à un générateur de gaz pyrotechnique et une autre entrée connectée à une source pneumatique via une vanne à détecteur.
